# EUROPÄISCHE PATENTSCHRIFT

(11) **EP 0 731 553 B1**
(45) Veröffentlichungstag und Bekanntmachung des Hinweises auf die Patenterteilung: **07.04.1999**
(21) Anmeldenummer: 96108784.8
(22) Anmeldetag: 29.09.1992
(51) Int. Cl.: H02M 1/14, H03H 11/04, H02J 1/02, G05F 3/24, H02J 3/01, G05F 1/575

(54) **Aktives Oberwellenfilter**
Active harmonic filter
Filtre d'harmoniques actif

(30) Priorität: 30.09.1991 DE 4132551
(43) Veröffentlichungstag der Anmeldung: 11.09.1996
(62) Teilanmeldung aus: 92116665.8
(73) Patentinhaber: SIEMENS AKTIENGESELLSCHAFT, 80333 München (DE)
(72) Erfinder: Wetzel, Klaus, Ing., D-81735 München (DE); Biebl, Alois, Ing., D-93358 Sankt Johann (DE)

(56) Entgegenhaltungen:
- EP-A- 0 280 514
- EP-A- 0 531 945
- US-A- 4 145 650
- US-A- 4 325 021

## Beschreibung

Die Erfindung betrifft ein Oberwellenfilter nach dem Oberbegriff des Patentanspruches 1.

Stark wechselnde Lasten, wie beispielsweise zur Leistungsregelung getaktete Verbraucher, verursachen auf der Zuleitung zwischen Versorgungsspannungsquelle und Verbraucher(n) Stromänderungen mit steilen Flanken. Als Folge davon treten auf der Zuleitung elektromagnetische Funkstörungen (EMI) auf, die wiederum andere Verbraucher negativ beeinflussen können. Darüber hinaus sind diesbezüglich auch Vorschriften mit entsprechenden EMI-Grenzwerten, vor allem bei Kraftfahrzeugen mit einer Vielzahl von sehr unterschiedlichen Verbrauchern, nur sehr schwer einzuhalten.

Elektromagnetischen Funkstörungen wurde bisher mit passiven Filtern begegnet, die den Anteil der aufgrund der steilen Flanken auftretenden Oberwellen verringern. Derartige passive Filter bestehen meistens aus Kapazitäten und Widerständen bzw. Induktivitäten. Um jedoch eine zufriedenstellende Oberwellendampfung zu erzielen, sind Filter mit verhältnismäßig großen Abmessungen notwendig.

Aus der EP 0 254 073 ist ein aktives und ein passives Filter bekannt, die zusammen Oberwellen dämpfen. Diese sind jedoch relativ aufwendig und mittels Induktivitäten realisiert.

Aus der Veröffentlichung "voltage regulators and power circuits" Cambridge University Press, 1980, Seite 174, 175, ist ein Oberwellen filter und eine Ladeeinrichtung bekannt. Diese weist jedoch den Nachteil eines langsamen Nachladens bzw. einer langsamen Inbetriebnahme auf.

Aus der US-A-4,145,650 ist eine Schaltungsanordnung zur begrenzung der Ausgangsspannung eines getakteten Spannungsreglers.

Aufgabe der Erfindung ist es daher, ein Oberwellenfilter anzugeben, das eine hohe Oberwellendampfung bei geringem Raumbedarf aufeist und ein schnelles Laden der Kapazität ermöglicht.

Die Aufgabe wird durch ein Oberwellenfilter gemäß Patentanspruch 1 gelöst. Ausgestaltungen und Weiterbildungen des Erfindungsgedankes sind Gegenstand von Unteransprüchen.

Die Erfindung wird nachfolgend anhand der in den Figuren der Zeichnung dargestellten Ausführungsbeispiele näher erläutert, wobei gleiche Elemente mit gleicher. Bezugszeichen versehen sind.

Es zeigt:
- Figur 1: ein Ausführungsbeispiel eines Oberwellenfilters und
- Figur 2: eine Ausführungsform eines erfindungsgemäßen Oberwellenfilters.

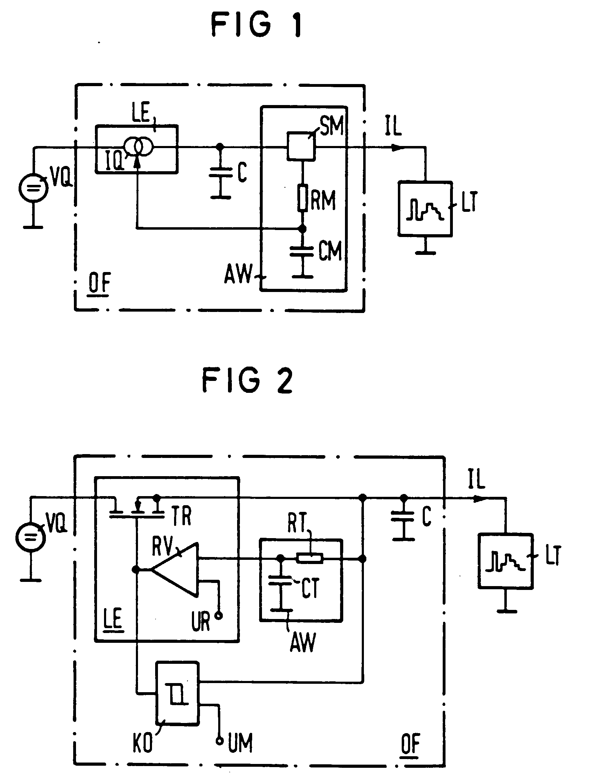

Bei dem Beispiel nach Figur 1 ist zwischen eine Versorgungsspannungsquelle VQ und eine Last LT ein erfindungsgemäßes Oberwellenfilter OF geschaltet. Das Oberwellenfilter OF enthält eine Kapazität C, die der Last LT parallel geschaltet ist. Weiterhin ist eine steuerbare Ladeeinrichtung LE vorgesehen, die zwischen Versorgungsspannungsquelle VQ und Kapazität C geschaltet ist. Eine Auswerteschaltung AW ermittelt den durch die Last LT fließenden mittleren Strom und steuert davon abhängig die Ladeeinrichtung LE.

Die Last LT setzt sich beispielsweise aus mehreren Verbrauchern zusammen, die zur Leistungsregelung getaktet werden. Dadurch ergibt sich ein treppenartiger Verlauf des durch die Last fließenden Stromes IL. Dieser Strom IL wird durch eine Strommeßeinrichtung SM ermittelt, wovon anschließend mit Hilfe eines Tiefpasses der Mittelwert gebildet wird. Der Tiefpaß besteht aus einem Widerstand RM, der zwischen den Ausgang der Strommeßeinrichtung SM und dem Steuereingang der Ladeeinrichtung LE geschaltet ist. Darüber hinaus enthält der Tiefpaß einen Kondensator CM der zwischen einen Steuereingang der Ladeeinrichtung LE und einem Bezugspotential geschaltet ist. An diesem Bezugspotential liegt auch jeweils ein Anschluß der Versorgungsspannungsquelle VQ, der Kapazität C und der Last LT. Zwischen dem jeweils anderen Anschluß der Versorgungsspannungsquelle VQ und der Kapazität C ist eine steuerbare Stromeinprägung IQ geschaltet, welche die Ladeeinrichtung LE bildet. Die Strommeßeinrichtung SM sowie der aus dem Widerstand RM und der Kapazität CM bestehende Tiefpaß bilden dabei die Auswerteeinheit AW. Das Ausführungsbeispiel nach Figur 2 ist gegenüber dem Beispiel nach Figur 1 dahingehend abgeändert, daß die Ladeeinrichtung LE als steuerbare Spannungseinprägung ausgebildet ist. Die Ladeeinrichtung LE besteht dabei aus einem Transistor TR, bevorzugt einem MOS-Feldeffekttransistor, dessen Sourceanschluß mit der Versorgungsspannungsquelle VQ und dessen Drainanschluß mit dem Kondensator C verbunden ist. Sein Gateanschluß ist mit dem Ausgang eines Regelverstärkers RV gekoppelt, dessen einer Eingang mit einer Referenzspannung UR beaufschlagt ist und dessen anderer Eingang mit dem Ausgang der Auswerteschaltung AW verbunden ist. Die Auswerteschaltung AW umfaßt dabei lediglich einen Tiefpaß bestehend aus einem Widerstand RT und einem Kondensator CT. Die Auswerteschaltung AW umfaßt bei dieser Ausführungsform keine Strommeßeinrichtung SM. Stattdessen ist der Eingang des Tiefpasses direkt an den Knotenpunkt zwischen Ladeeinrichtung LE und Kapazität C gelegt. An diesen Knotenpunkt ist zudem ein Eingang eines Komparators KO angeschlossen, dessen weiterer Eingang mit einer Vergleichsspannung UM beaufschlagt ist. Der Ausgang des Komparators KO ist dem Ausgang des Regelverstärkers RV parallel geschaltet.

Die Funktionsweise eines Oberwellenfilters besteht beispielsweise im wesentlichen darin, daß die Kapazität C mit einem Strom geladen wird, der dem mittleren Strombedarf der Last LT entspricht. Die Kapazität C sorgt dabei zum einen für eine annähernd gleichmäßige, an der Last LT anliegende Spannung und zum anderen werden kurzfristige Laststromspitzen aus der Kapazität C entnommen. Das Nachladen der Kapazität C kann, wie in Figur 1 gezeigt, beispielsweise durch eine steuerbare Stromquelle erfolgen, die abhängig vom Mittelwert des durch die Last fließenden Stromes IL gesteuert wird. Beim Ausführungsbeispiel nach Figur 2 erfolgt das Nachladen der Kapazität C mittels eines Spannungsreglers, dessen Spannung langsam erhöht (bzw. unter Umständen auch erniedrigt) wird. Das langsame Nachregeln wird dabei durch die Verzögerungseinrichtung bestehend aus dem Widerstand RT und der Kapazität CT erreicht. Als Eingangsgröße für die Verzögerungseinrichtung dient dabei die an der Kapazität C abfallende Spannung. Dabei wird davon ausgegangen, daß sich die Entnahme eines mittleren Laststromes durch einen entsprechenden Spannungsabfall an der Kapazität C äußert. Dies wird durch die Auswerteschaltung AW ermittelt und davon abhängig der Spannungregler aufgrund des Tiefpaßverhaltens der Auswerteschaltung AW zeitverzögert nachgestellt. Der Vorteil dabei ist, daß keine Strommeßeinrichtung SM benötigt wird, so daß der Aufwand insgesamt sehr gering ist.

Die Erfindung ausgestaltend ist zudem bei dem Oberwellenfilter OF nach Figur 2 der Komparator KO vorgesehen, der die an der Kapazität C anliegende Spannung mit einem Vergleichswert UM vergleicht. Beim Absinken der Spannung an der Kapazität C unter einen gegebenen Grenzwert, nämlich die Vergleichsspannung UM, schaltet der Komparator KO die Ladeeinrichtung LE bzw. den Transistor TR vollständig durch. Damit ist bei Inbetriebnahme der Anordnung oder bei kurzzeitigen Störfällen ein schnelles Nachladen der Kapazität C gewährleistet. Der Komparator KO wird bevorzugt mit Schalthysterese ausgeführt, damit beim Schnelladen der Kapazität C eine Energiereserve erzeugt wird. Andernfalls würden sich mehrere ungewollte Ladestromspitzen durch mehrmaliges Nachladen ergeben. Die Kapazität C kann dabei wesentlich kleiner gewählt werden, als bei üblichen Oberwellenfiltern.

## Patentansprüche

1. Oberwellenfilter, das zwischen einer Versorgungsspannungsquelle (VQ) und eine Last (LT) geschaltet ist, mit einer Kapazität (C), die der Last (LT) parallel geschaltet ist, mit einer steuerbaren Ladeeinrichtung (LE), die zwischen Versorgungsspannungsquelle (VQ) und Kapazität (C) geschaltet ist, und mit einer Auswerteeinrichtung (AW), die einen mittleren wert der Spannung auf der Kapazität (C) ermittelt und davon abhängig die Ladeeinrichtung (LE) steuert, wobei die Ladeschaltung eine steuerbare Spannungseinprägung (TR, RV) aufweist,
**dadurch gekennzeichnet**, daß zwischen Ladeeinrichtung (LE) und Kapazität (C) ein Komparator (KO) geschaltet ist, der bei Absinken der Spannung an der Kapazität (C) unter einen gegebenen Grenzwert (UM) die Ladeeinrichtung (LE) durchschaltet.

2. Oberwellenfilter nach Anspruch 1,
**gekennzeichnet durch**, eine Schalthysterese beim Komparator (KO).

3. Oberwellenfilter nach einem der Ansprüche 1 oder 2,
**dadurch gekennzeichnet,** daß die Auswerteschaltung (AW) eine Verzögerungseinrichtung (RT, CT) aufweist, die abhängig von der an der Kapazität (C) anliegenden Spannung die Ladeeinrichtung (LE) verzögert steuert.

4. Oberwellenfilter nach Anspruch 2,
**dadurch gekennzeichnet,** daß die Verzögerungseinrichtung aus einem Tiefpaß (RT, CT) besteht.

## Claims

1. Harmonic filter, which is connected between a supply voltage source (VQ) and a load (LT), having a capacitor (C) which is connected in parallel with the load (LT), having a controllable charging device (LE) which is connected between the supply voltage source (VQ) and the capacitor (C), and having an evaluation device (AW) which determines an average value of the voltage across the capacitor (C) and controls the charging device (LE) on the basis of this, the charging circuit having a ccntrollable voltage applicator (TR, RV), characterized in that a comparator (KO), which connects up the charging device (LE) when the voltage at the capacitor (C) falls below a specified limit value (UM), is connected between the charging device (LE) and the capacitor (C).

2. Harmonic filter according to Claim 1, characterized by a switching hysteresis in the comparator (KO).

3. Harmonic filter according to one of Claims 1 and 2, characterized in that the evaluation circuit (AW) has a delay device (RT, CT) which controls the charging device (LE) with a delay on the basis of the voltage present at the capacitor (C).

4. Harmonic filter according to Claim 2, characterized in that the delay device consists of a low-pass filter (RT, CT).

## Revendications

1. Filtre d'harmoniques, qui est branché entre une source (VQ) de tension d'alimentation et une charge (LT), qui comporte une capacité (C) qui est branchée en parallèle avec la charge (LT), qui comporte un dispositif (LE) de charge qui peut être commandé et qui est branché entre la source (VQ) de tension d'alimentation et la capacité (C), et qui comporte un dispositif (AW) d'évaluation, qui détermine une valeur moyenne de la tension sur la capacité (C) et qui commande le dispositif (LE) de charge en fonction de cela, le circuit de charge comportant une applique (TR, RV) de tension pouvant être commandée, caractérisé en ce qu'il est branché, entre le dispositif (LE) de charge et la capacité (C), un comparateur (KO) qui, en cas d'abaissement de la tension sur la capacité (C) au-dessous d'une valeur (UM) limite donnée, interconnecte le dispositif (LE) de charge.

2. Filtre d'harmoniques suivant la revendication 1, caractérisé par une hystérésis de commutation pour le comparateur (KO).

3. Filtre d'harmoniques suivant l'une des revendications 1 ou 2, caractérisé en ce que le circuit (AW) d'évaluation comporte un dispositif (RT, CT) de retardement qui commande de manière retardée le dispositif (LE) de charge en fonction de la tension s'appliquant à la capacité (C).

4. Filtre d'harmoniques suivant la revendication 2, caractérisé en ce que le dispositif de retardement est constitué d'un passe-bas (RT, CT).
